# EUROPÄISCHE PATENTSCHRIFT

(11) **EP 1 358 754 B1**
(45) Veröffentlichungstag und Bekanntmachung des Hinweises auf die Patenterteilung: **26.07.2006**
(21) Anmeldenummer: 02706610.9
(22) Anmeldetag: 22.01.2002
(51) Int. Cl.: H04M 1/725, H04Q 7/32

(54) **VERFAHREN UND KOMMUNIKATIONSSYSTEM ZUR STEUERUNG EINER BENUTZUNGSOBERFLÄCHE EINES MOBILEN KOMMUNIKATIONSENDGERÄTS**
METHOD AND COMMUNICATION SYSTEM FOR CONTROLLING THE USER INTERFACE OF A MOBILE COMMUNICATION TERMINAL
PROCEDE ET SYSTEME DE COMMUNICATION DESTINE A LA COMMANDE D'UNE INTERFACE UTILISATEUR D'UN TERMINAL MOBILE DE COMMUNICATION

(30) Priorität: 07.02.2001 DE 10105583
(43) Veröffentlichungstag der Anmeldung: 05.11.2003
(73) Patentinhaber: SIEMENS AKTIENGESELLSCHAFT, 80333 München (DE)
(72) Erfinder: WILLE, Klaus, 81679 München (DE); HELBING, Michael, 81476 München (DE); WINDECKER, Rainer, 81739 München (DE)
(86) Internationale Anmeldenummer: PCT/DE2002/000197
(87) Internationale Veröffentlichungsnummer: WO 2002/063860

(56) Entgegenhaltungen:
- EP-A- 1 037 452
- WO-A-00/01193
- DE-A- 19 930 007
- US-A- 6 167 255

## Beschreibung

In Firmen verwendete Kommunikationsanlagen und deren zugehörige drahtgebundene Kommunikationsendgeräte (im folgenden vereinfachend als "Endgeräte" bezeichnet) bieten im allgemeinen ein gegenüber öffentlichen Fernsprechnetzen höheres Spektrum an Leistungsmerkmalen, beispielsweise die Leistungsmerkmale "Rückruf bei Besetzt" oder "Anruf übernehmen". Eine Bedienung und Einstellung dieser Leistungsmerkmale wird dabei oft von einer Anzeigeeinheit am Endgerät unterstützt, die unter anderem mögliche Aktionen oder Einstellungsoptionen darstellt.

Eine intuitive Form der Eingabe (z.B. eine Definition von Kurzwahlzieltasten, eine Einstellung eines Umleitungsziels usw.) wird beispielsweise durch eine menügesteuerte Navigation mittels zweier Pfeiltasten und einer Bestätigungstaste ermöglicht, wobei der Teilnehmer mit den Pfeiltasten eine Option oder einen Untermenüeintrag mit Hilfe der an der Anzeigeeinheit dargestellten Erklärungen auswählen und mit der Bestätigungstaste die ausgewählte Aktion veranlassen kann. Diese Form der Eingabe ermöglicht auch unversierten Teilnehmern eine schnelle Vertrautheit mit der Bedienung des Endgeräts.

Bei modernen Kommunikationsanlagen, wie z.B. der HICOM-Baureihe der Firma Siemens, wird der aus textuellen Informationen bestehende Inhalt der Anzeigeeinheit eines Endgeräts ausschließlich von der Kommunikationsanlage definiert und - beispielsweise über den D-Kanal einer ISDN-Leitung - in Form von Steuerinformationen an das Endgerät übermittelt. In umgekehrter Richtung erfolgt nach Betätigung einer Taste am Endgerät eine Übermittlung einer Steuerinformation an die Kommunikationsanlage, wobei diese Steuerinformationen lediglich die betätigte Taste charakterisiert, ihre Bedeutung jedoch erst in der Kommunikationsanlage in Abhängigkeit von Einstellungen des an diesem Endgerät registrierten Teilnehmers zugewiesen wird. Als Beispiel hierfür sei eine Zielwahltaste genannt, bei deren Betätigung eine die Taste identifizierende Steuerinformation - im folgenden auch Tastenanreiz genannt - vom Endgerät an die Kommunikationsanlage übermittelt wird. In der Kommunikationsanlage erfolgt mittels des empfangenen Tastenanreizes eine von teilnehmerspezifisch gespeicherten Daten abhängige Zuordnung der Tastenfunktion (Zielwahl) sowie des Tasteninhalts (der Rufnummer, die vom Teilnehmer unter dieser Zielwahltaste gespeichert wurde). Das Protokoll für den bidirektionalen Austausch derartiger Steuernachrichten zwischen der Kommunikationsanlage und dem Endgerät - allgemein als Stimulus-Telephonprotokoll bezeichnet - unterstützt damit eine weitestmögliche Verlagerung der Rechenleistung in die Kommunikationsanlage.

Unter dem Ausdruck Benutzungsoberfläche wird im folgenden die Präsentation von Informationen (beispielsweise mit Hilfe einer Anzeigeeinheit, akustischen Signalen, Signalleuchten usw.) an ein Endgerät eines Teilnehmers verstanden, sowie im weiteren Sinn die Bedienungskonventionen des Endgeräts (beispielsweise durch eine menügesteuerte Auswahl).

Angesichts der steigenden Verbreitung von mobilen Endgeräten entsteht bei vielen Firmen der Wunsch, ihre bestehende Kommunikationsanlage zusätzlich für einen Einsatz dieser mobilen Endgeräte auszugestalten. Ein Besitzer eines mobilen Endgeräts soll hierzu als ein Teilnehmer des durch die Kommunikationsanlage verwalteten Fernsprechnetzes registriert sein und im übrigen über das gleiche Spektrum an Leistungsmerkmalen und Bedienungsmöglichkeiten verfügen wie ein über ein drahtgebundenes Endgerät an dieser Kommunikationsanlage registrierter Teilnehmer.

Die Anbindung von GSM-Systemen (Global System for Mobile Communications) an firmeigene Kommunikationsanlagen ermöglicht eine im Leistungsumfang teilweise Integration von Teilnehmern mit einem mobilen Endgerät in ein firmeneigenes Fernsprechnetz, wobei die in firmeninternen Kommunikationsnetzen eingesetzten GSM-Systeme üblicherweise als CGSM-Systeme (Corporate GSM) bezeichnet werden.

Da die an der Kommunikationsanlage verfügbaren Leistungsmerkmale - wie eingangs erwähnt - meist umfangreicher sind als die in öffentlichen Fernsprechnetzen, insbesondere auch bei (C)GSM-Systemen, ergibt sich das Problem, diese Leistungsmerkmale auch auf mobilen Endgeräten bedienen und einstellen zu können.

Aus der WO 00/01193 ist ein Verfahren bekannt, mit dessen Einsatz eine Übermittlung von Menükommandos an ein mobiles Endgerät vorsieht. Dabei ist in einem Knoten - dem so genannten Cooperating Node - des Kommunikationssystems ein Menügenerator zur Generierung einer Menüstrukturnachricht, welche die Textbestandteile des Menüs enthält sowie eine Sendeeinheit zur Übermittlung der Menüstrukturnachricht an das mobile Endgerät vorgesehen. Im mobilen Endgerät ist ein Auswahlnachrichtengenerator zur Generierung der Auswahlnachricht vorgesehen, die nach Auswahl des entsprechenden Menütexteintrags durch einen Bediener eine Übermittlung dieses ausgewählten Menütexteintrags über eine Nachrichtensendeeinheit an den Knoten vorsieht.

Aus der US 6167255 ist ein ähnliches Verfahren zur Übermittlung von Menüstrukturen bekannt, bei dem Menüoptionen von einem Servicecenter über ein traditionelles Kommunikationsnetzwerk unter Verwendung eines Sprachkanals übermittelt werden. Eine Auswahl einer Menüoption durch einen Bediener eines mobilen Endgeräts löst daraufhin einen dafür vorgesehenen Dienst, z.B. Notfalldienste, Informationsdienste usw., des Servicecenters aus.

Eine Bedienung über Menüs entspricht dabei nicht dem Wunsch vieler Kunden hin zu einer ebenso intuitiven Bedienung von mobilen Endgeräten wie von den erwähnten, von einer Kommunikationseinrichtung gesteuerten Endgeräten bzw. zu einer Harmonisierung beider Benutzungsoberflächen.

Für eine einfache Bedienung sollte dabei ein Teilnehmer an einem mobilen Endgerät eine mit einem drahtgebundenen Endgerät weitgehend identische Benutzungsoberfläche vorfinden. Viele Anzeigen eines mobilen Endgeräts werden zwar indirekt durch die GSM-Station, an der das mobile Endgerät registriert ist, gesteuert (beispielsweise die Anzeige des Fernmeldedienstanbieters), eine Definition des Inhalts der graphischen Anzeigeeinheit erfolgt jedoch ausschließlich durch die Steuerungselektronik des mobilen Endgeräts.

Der vorliegenden Erfindung liegt die Aufgabe zugrunde, ein Verfahren und ein Kommunikationssystem anzugeben, durch welches unter Verwendung einer bestehenden Kommunikationsanlage eine Anbindung von handelsüblichen mobilen Endgeräten erreicht werden kann.

Eine Lösung der Aufgabe erfolgt durch die Merkmale des Patentanspruchs 1 bzw. 8.

Bei dem erfindungsgemäßen Verfahren werden Steuerinformationen zur Emulation einer Benutzungsoberfläche eines drahtgebundenen Endgeräts an ein mobiles Endgerät zumindest teilweise über ein paketorientiertes Datenübertragungsprotokoll - insbesondere das WAP-Protokoll (Wireless Application Protocol) - übermittelt. Hierbei können die Steuerinformationen ausschließlich über das WAP-Protokoll oder über das WAP-Protokoll und das sogenannte GSM-Protokoll (Global System for Mobile Communications) gleichzeitig übermittelt werden. Nahezu alle neueren mobilen Endgeräte enthalten eine Visualisierungseinheit - in der Literatur häufig als Browser bezeichnet - mit der ein Zugriff auf Datenübermittlungssysteme möglich ist, bei denen ein Datenaustausch nach dem WAP-Protokoll erfolgt. Dieser Browser kann die Steuerinformationen für die Benutzungsoberfläche empfangen und in eine graphische Darstellung auf einer Anzeigeeinheit am mobilen Endgerät umsetzen. Wenngleich die Bedienung von Browser- und Telephoniefunktion eines mobilen Endgeräts durch einen Teilnehmer zwar meistens mit der Benutzung ausschließlich einer der genannten Funktion erfolgt, steht einem gleichzeitigen Austausch von Sprach- und Steuerinformationen nach dem GSM-Protokoll und Datenpaketen nach dem WAP-Protokoll technisch nichts entgegen.

Ein wesentlicher Vorteil des erfindungsgemäßen Verfahrens besteht darin, dass zur Darstellung der Benutzungsoberfläche handelsübliche mobile Endgeräte verwendet werden können, die lediglich über einen Browser für paketorientierte Datenprotokolle verfügen müssen. Eine aufwendige Modifikation der Geräteelektronik oder der Steuerungssoftware des mobilen Endgeräts entfällt damit.

Ein weiterer Vorteil des erfindungsgemäßen Verfahrens ist darin zu sehen, dass durch die Verwendung einer standardisierten, paketorientierten Datenschnittstelle (beispielsweise WAP), die Beschaffenheit der Steuerinformationen zur Darstellung der Benutzungsoberfläche nicht von der Bauart des mobilen Endgeräts abhängig ist.

Vorteilhafte Weiterbildungen der Erfindung sind in den Unteransprüchen angegeben.

Vorteilhaft wird die Benutzungsoberfläche analog zu der Benutzungsoberfläche eines an die gleiche Kommunikationsanlage angeschlossenen, drahtgebundenen Endgeräts gestaltet, um für einen Teilnehmer eine vertraute Bedienung zu gewährleisten.

Ein Ausführungsbeispiel der Erfindung wird im folgenden anhand der Zeichnung näher erläutert.

Dabei zeigen:
- Fig. 1:: ein Strukturbild zur schematischen Darstellung eines Kommunikationssystems mit mobilen Endgeräten; und
- Fig. 2:: eine schematische Darstellung eines mobilen Endgeräts.

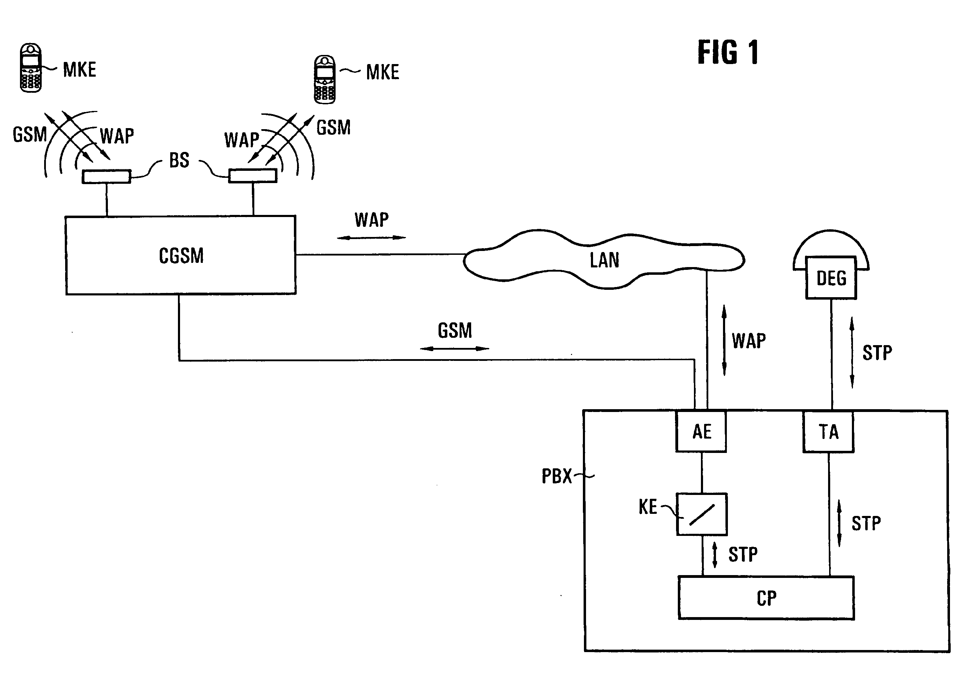

In Fig. 1 ist eine Kommunikationsanlage PBX dargestellt, die eine mit einer Vermittlungs- und Leistungsmerkmalsteuerungseinheit CP verbundene Konvertiereinheit KE aufweist. Die Konvertiereinheit KE ist ihrerseits mit einer Anschlusseinheit AE verbunden. Alternativ kann die Konvertiereinheit KE auch als eigenständige Einheit ausgestaltet sein, die extern an die Kommunikationsanlage PBX angeschlossen ist.

Die Vermittlungs- und Leistungsmerkmalsteuerungseinheit CP steuert unter anderem die Benutzungsoberfläche eines an eine Teilnehmeranschlusseinheit TA der Kommunikationsanlage PBX angeschlossenen drahtgebundenen Endgeräts DEG. Unter Verwendung eines sogenannten Stimulus-Telephonprotokolls STP werden einerseits Tastenanreize sowie sonstige Anreize wie z.B. "Abheben" oder "Auflegen" von dem drahtgebundenen Endgerät DEG über die Teilnehmeranschlusseinheit TA zur Kommunikationsanlage PBX gesendet und andererseits Anzeigenelemente für die Benutzungsoberfläche des drahtgebundenen Endgeräts DEG durch die Übermittlung entsprechender Steuerinformationen gesteuert.

Zusätzlich steuert die Vermittlungs- und Leistungsmerkmalsteuerungseinheit CP über die Konvertiereinheit KE die Benutzungsoberfläche eines mobilen Endgeräts. Für eine Steuerung der Benutzungsoberfläche des an der Kommunikationsanlage PBX registrierten, mobilen Endgeräts MKE konvertiert die Konvertiereinheit KE das Stimulus-Telephonprotokoll STP in ein paketorientiertes Datenübertragungsprotokoll WAP - mit dem sie mit der Anschlusseinheit AE kommuniziert - und umgekehrt.

Die Anschlusseinheit AE ist zum einen mit einem Datennetz LAN verbunden, wobei die Anschlusseinheit Daten mit einem CGSM-System CGSM auf Basis des paketorientierten Datenübertragungsprotokolls WAP austauscht. Zum anderen ist die Anschlusseinheit AE mit dem CGSM-System CGSM über eine Daten-und Sprachinformationen nach dem GSM-Protokoll übertragende Leitung GSM verbunden, über die sowohl eine Übertragung von Sprachinformationen als auch von Steuerinformationen bewerkstelligt wird.

Der Ausdruck LAN (Local Area Network) bezeichnet im Ausführungsbeispiel ein lokales Datennetz, das jedoch in seinen topologischen Ausmaßen keiner lokalen Beschränkung unterliegt und demzufolge auch als WAN (Wide Area Network) ausgestaltet sein kann.

In diesem Ausführungsbeispiel wird davon ausgegangen, dass die Übertragung von Informationen zur Steuerung der Benutzungsoberfläche eines an der Kommunikationsanlage PBX registrierten, mobilen Endgeräts MKE ausschließlich durch das paketorientierte Datenübertragungsprotokoll WAP vorgenommen wird. Es sind jedoch auch Ausgestaltungen im Sinne der Erfindung realisierbar, bei denen die Steuerinformationen nur zum Teil durch das paketorientierte Datenübertragungsprotokoll WAP ausgetauscht werden, andere - zur Steuerung der Benutzeroberfläche notwendige - Informationen aber weiterhin über das GSM-Protokoll übermittelt werden. Als Beispiel hierfür wären Signalisierungsinformation zu nennen, die u.a. ein Abheben oder Auflegen des Teilnehmers melden oder die Ziffernübertragung bei der Wahl einer Teilnehmerrufnummer.

An das CGSM-System CGSM sind Basisstationen BS angeschlossen, die über eine Luftschnittstelle (in der Zeichnung als konzentrische Kreisbögen dargestellt) mit zwei mobilen Endgeräten MKE Daten auf Basis des paketorientierten Datenübertragungsprotokolls WAP sowie des GSM-Standards GSM kommunizieren.

Für die Ansteuerung einer Anzeigeeinheit eines mobilen Endgeräts MKE setzt die Konvertiereinheit KE von der Steuereinheit erhaltene Steuerinformationen in das paketorientierte Datenübertragungsprotokoll WAP um und sendet diese Steuerinformationen über das Datennetz LAN zum CGSM-System CGSM, wo sie von einer Basisstation BS über die Luftschnittstelle an ein mobile Endgerät MKE übermittelt werden. In umgekehrter Richtung werden durch die Konvertiereinheit KE gemäß dem paketorientierten Datenübertragungsprotokoll WAP übermittelte Tastenanreize in das Stimulus-Telephonprotokoll STP eines drahtgebundenen Endgeräts DEG übersetzt und an die Vermittlungs-und Leistungsmerkmalsteuerungseinheit CP übermittelt.

Durch die Vermittlungs- und Leistungsmerkmalsteuerungseinheit CP wird eine dem Tastenanreiz entsprechende Funktion in der Kommunikationsanlage PBX veranlasst.

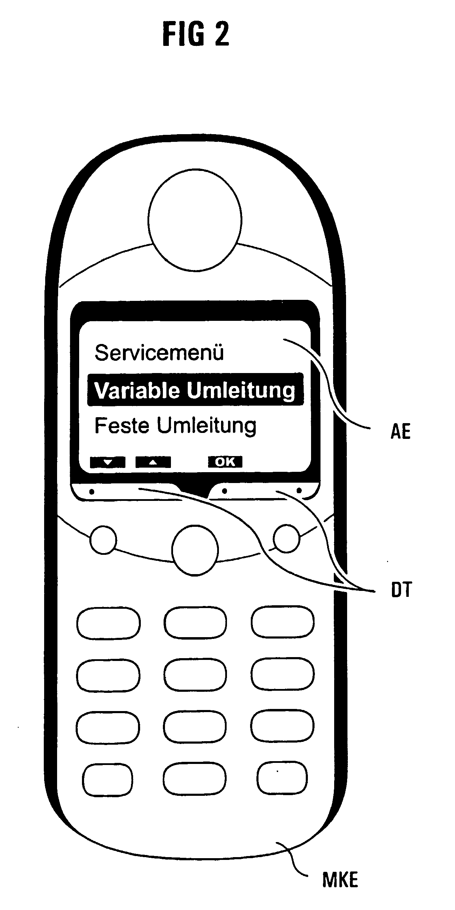

Fig. 2 zeigt ein mobiles Endgerät MKE mit einer Anzeigeeinheit AE und zwei dieser Anzeigeeinheit zugeordneten Anzeigentasten DT. Die beiden Anzeigentasten DT sind jeweils als Wippentasten ausgestaltet, sodass durch jeweils eine Anzeigentaste DT durch den Bediener des mobilen Endgeräts MKE zwei unterschiedliche Aktionen veranlasst werden können, je nachdem, ob sie im linken oder im rechten Teilbereich der jeweiligen Anzeigentaste DT betätigt wird.

Jeder Anzeigentaste DT sind bei der Benutzungsoberfläche eines mobilen Endgeräts üblicherweise Bedienoptionen zugeordnet, die in der Anzeigeeinheit AE unmittelbar oberhalb der Tasten dargestellt sind. Im vorliegenden Beispiel sind dies zwei Pfeile und eine Bestätigung ("OK").

Die Anzeigeeinheit AE sowie die Anzeigentasten DT emulieren eine Benutzungsoberfläche eines Endgeräts, bei dem Einstellungen mit Hilfe von Pfeiltasten und einer Bestätigungstaste getätigt werden können. Mit den Anzeigentasten DT, die den beiden Pfeilen zugeordnet sind, ist eine Navigation innerhalb verschiedener Untermenüs oder Einstellungsoptionen möglich, die mit der Bedienoption "OK" zugeordneten Anzeigentaste DT ausgewählt werden.

Im vorliegenden Ausführungsbeispiel kann ein Teilnehmer durch die Bedienoption "OK" das Untermenü "Variable Umleitung" anwählen und durch die Bedienoptionen "Pfeil oben" bzw. "Pfeil unten" in die Untermenüs "Servicemenü" bzw. "Feste Umleitung" springen.

## Patentansprüche

1. Verfahren zur Steuerung einer Benutzungsoberfläche eines mobilen Kommunikationsendgeräts (MKE),
**dadurch gekennzeichnet,**
**dass** das mobile Kommunikationsendgerät an einer Kommunikationsanlage (PBX) registriert ist, bei dem Steuerinformationen zur Darstellung der Benutzungsoberfläche von der Kommunikationsanlage (PBX) an das mobile Kommunikationsendgerät (MKE) zumindest teilweise mittels eines paketorientierten Datenübertragungsprotokolls (WAP) übertragen werden.

2. Verfahren nach Anspruch 1,
**dadurch gekennzeichnet,**
**dass** die Steuerinformationen zwischen dem mobilen Kommunikationsendgerät (MKE) und der Kommunikationsanlage (PBX) über das an sich bekannte WAP-Protokoll ausgetauscht werden.

3. Verfahren nach einem der vorstehenden Ansprüche,
**dadurch gekennzeichnet,**
**dass** die Benutzungsoberfläche eine Menüsteuerung anhand von Richtungswahl- und Bestätigungstasten ermöglicht.

4. Verfahren nach einem der vorstehenden Ansprüche,
**dadurch gekennzeichnet,**
**dass** die Benutzungsoberfläche des mobilen Kommunikationsendgeräts (MKE) analog zu einer Benutzungsoberfläche eines an die Kommunikationsanlage (PBX) drahtgebunden angeschlossenen Kommunikationsendgerät emuliert wird.

5. Verfahren nach Anspruch 4,
**dadurch gekennzeichnet ,**
**dass** die drahtgebundenen Kommunikationsendgeräte von der Kommunikationsanlage (PBX) durch ein anlagenspezifisches Protokoll (STP) für einen bidirektionalen Austausch von Steuernachrichten zwischen der Kommunikationsanlage (PBX) und gesteuerten Endgeräten (DEG) gesteuert werden.

6. Verfahren nach Anspruch 5,
**dadurch gekennzeichnet,**
**dass** durch die Betätigung einer Taste des mobilen Kommunikationsendgeräts (MKE) mittels des paketorientierten Datenübertragungsprotokolls (WAP) eine Steuerinformation an die Kommunikationsanlage (PBX) übermittelt wird, und
**dass** diese Steuerinformation von der Kommunikationsanlage (PBX) in das anlagenspezifische Protokoll (STP) für einen bidirektionalen Austausch von Steuernachrichten zwischen der Kommunikationsanlage (PBX) und gesteuerten Endgeräten (DEG) umgesetzt wird.

7. Verfahren nach einem der Ansprüche 5 oder 6,
**dadurch gekennzeichnet,**
**dass** eine bidirektionale Konversion zwischen dem anlagenspezifischen Protokoll (STP) für einen bidirektionalen Austausch von Steuernachrichten zwischen der Kommunikationsanlage (PBX) und gesteuerten Endgeräten (DEG) und dem paketorientierten Datenübertragungsprotokolls (WAP) durch eine der Kommunikationsanlage (PBX) zugeordneten Konvertiereinheit (KE) durchgeführt wird.

8. Kommunikationssystem zur Steuerung einer Benutzungsoberfläche eines mobilen Kommunikationsendgeräts (MKE), mit einer Kommunikationsanlage (PBX) zum Anschluss von drahtgebundenen Kommunikationsendgeräten, wobei eine Steuerung der Benutzungsoberfläche dieser Kommunikationsendgeräte durch ein anlagenspezifisches Protokoll (STP) für einen bidirektionalen Austausch von Steuernachrichten zwischen der Kommunikationsanlage (PBX) und gesteuerten Endgeräten (DEG) erfolgt,
**gekennzeichnet durch**,
- eine der Kommunikationsanlage (PBX) zugeordnete Konvertiereinheit (KE) zur bidirektionalen Konversion von Steuerinformationen des anlagenspezifischen Protokoll (STP) für einen bidirektionalen Austausch von Steuernachrichten und einem paketorientierten Datenübertragungsprotokoll (WAP), und
- einer oder mehrerer zellulärer Basisstationen (BS) zur Übermittlung der konvertierten Steuerinformation an das mobile Kommunikationsendgerät (MKE).

9. Kommunikationssystem nach Anspruch 8,
**dadurch gekennzeichnet,**
**dass** die zelluläre Basisstation (BS) Teil eines GSM- und/oder CGSM-Systems (CGSM) ist.

10. Kommunikationssystem nach einem der Ansprüche 8 oder 9,
**dadurch gekennzeichnet,**
**dass** die Konvertiereinheit mit dem GSM- oder CGSM-System (CGSM) über ein lokales Netzwerk (LAN) verbunden ist.

11. Kommunikationssystem nach einem der Ansprüche 8 bis 10,
**dadurch gekennzeichnet,**
**dass** die Konvertiereinheit (KE) in der Kommunikationsanlage (PBX) integriert ist.

## Claims

1. Method for controlling a user interface of a mobile communication terminal (MKE),
**characterised in that**
the mobile communication device is registered to a communication facility (PBX) with which control information for representing the user interface is transmitted from the communication facility (PBX) to the mobile communication terminal (MKE) at least partially by means of a packet-oriented communication protocol (WAP).

2. Method according to claim 1,
**characterised in that**
the control information is exchanged between the mobile communication terminal (MKE) and communication facility (PBX) using the WAP protocol known per se.

3. Method according to one of the preceding claims,
**characterised in that**
the user interface facilitates menu control by means of direction-selection and confirmation keys.

4. Method according to one of the preceding claims,
**characterised in that**
the user interface of the mobile communication terminal (MKE) is emulated analogously to a user interface of a wire-linked communication terminal connected to the communication facility (PBX).

5. Method according to claim 4,
**characterised in that**
the wire-linked communication terminals of the communication facility (PBX) are controlled by a system-specific stimulus telephone protocol (STP) for a bi-directional exchange of control messages between the communication facility (PBX) and controlled terminals (DEG).

6. Method according to claim 5,
**characterised in that**
the actuation of a key on the mobile communication terminal (MKE) causes control information to be transmitted to the communication facility (PBX) by means of the packet-oriented communication protocol (WAP), and
**in that** this control information is converted by the communication facility (PBX) to the system-specific stimulus telephone protocol (STP) for a bi-directional exchange of control messages between the communication facility (PBX) and controlled terminals (DEG).

7. Method according to one of claims 5 or 6,
**characterised in that**
a bi-directional conversion is performed between the system-specific stimulus telephone protocol (STP) - for a bi-directional exchange of control messages between the communication facility (PBX) and controlled terminals (DEG) - and the packet-oriented communication protocol (WAP) by a conversion unit (KE) assigned to the communication facility (PBX).

8. Communication system for controlling a user interface of a mobile communication terminal (MKE), with a communication facility (PBX) for connecting wire-linked communication terminals, where the user interface of these communication terminals is controlled by a system-specific stimulus telephone protocol (STP) for a bi-directional exchange of control messages between the communication facility (PBX) and controlled terminals (DEG),
**characterised by**
- a conversion unit (KE) assigned to the communication facility (PBX) for the bi-directional conversion of control information of the system-specific stimulus telephone protocol (STP) for a bi-directional exchange of control messages and a packet-oriented communication protocol (WAP), and
- one or more cellular base stations (BS) for transmitting the converted control information to the mobile communication terminal (MKE).

9. Communication system according to claim 8,
**characterised in that**
the cellular base station (BS) is part of a GSM and/or CGSM system (CGSM).

10. Communication system according to one of claims 8 or 9,
**characterised in that**
the conversion unit is connected to the GSM or CGSM system (CGSM) via a local area network (LAN).

11. Communication system according to one of claims 8 to 10,
**characterised in that**
the conversion unit (KE) is integrated into the communication facility (PBX).

## Revendications

1. Procédé de commande d'une surface utilisateur d'un terminal de communication mobile (MKE), **caractérisé en ce que** le terminal de communication mobile est enregistré auprès d'une installation de communication (PBX), dans lequel des informations de commande pour visualiser la surface utilisateur sont transmises par l'installation de communication (PBX) au terminal de communication mobile (MKE) au moins en partie au moyen d'un protocole de transmission de données orienté paquets (WAP).

2. Procédé selon la revendication 1, **caractérisé en ce que** les informations de commande sont échangées entre le terminal de communication mobile (MKE) et l'installation de communication (PBX) via le protocole WAP en soi connu.

3. Procédé selon l'une des revendications précédentes, **caractérisé en ce que** la surface utilisateur permet une commande de menu à l'aide de touches de sélection de sens et de touches de confirmation.

4. Procédé selon l'une des revendications précédentes, **caractérisé en ce que** la surface utilisateur du terminal de communication mobile (MKE) est émulée de manière analogue à une surface utilisateur d'un terminal de communication raccordé de manière câblée à l'installation de communication (PBX).

5. Procédé selon la revendication 4, **caractérisé en ce que** les terminaux de communication câblés sont commandés par l'installation de communication (PBX) par un protocole spécifique à l'installation (STP) pour un échange bidirectionnel de messages de commande entre l'installation de communication (PBX) et des terminaux commandés (DEG).

6. Procédé selon la revendication 5, **caractérisé en ce qu'**une information de commande est transmise à l'installation de communication (PBX) par l'actionnement d'une touche du terminal de communication mobile (MKE) au moyen du protocole de transmission de données orienté paquets (WAP) et **en ce que** cette information de commande est convertie par l'installation de communication (PBX) dans le protocole spécifique à l'installation (STP) pour un échange bidirectionnel de messages de commande entre l'installation de communication (PBX) et des terminaux commandés (DEG).

7. Procédé selon l'une des revendications 5 ou 6, **caractérisé en ce qu'**une conversion bidirectionnelle entre le protocole spécifique à l'installation (STP), pour un échange bidirectionnel de messages de commande entre l'installation de communication (PBX) et des terminaux commandés (DEG), et le protocole de transmission de données orienté paquets (WAP) est opérée par une unité de conversion (KE) affectée à l'installation de communication (PBX).

8. Système de communication pour commander une surface utilisateur d'un terminal de communication mobile (MKE), comprenant une installation de communication (PBX) pour le raccordement de terminaux de communication câblés, une commande de la surface utilisateur de ces terminaux de communication se faisant par un protocole spécifique à l'installation (STP) pour un échange bidirectionnel de messages de commande entre l'installation de communication (PBX) et des terminaux commandés (DEG), **caractérisé par**
- une unité de conversion (KE) affectée à l'installation de communication (PBX) pour la conversion bidirectionnelle d'informations de commande du protocole spécifique à l'installation (STP) pour un échange bidirectionnel de messages de commande et un protocole de transmission de données orienté paquets (WAP) et
- une ou plusieurs stations de base cellulaires (BS) pour la transmission de l'information de commande convertie au terminal de communication mobile (MKE).

9. Système de communication selon la revendication 8, **caractérisé en ce que** la station de base cellulaire (BS) fait partie d'un système GSM et/ou CGSM (CGSM).

10. Système de communication selon l'une des revendications 8 ou 9, **caractérisé en ce que** l'unité de conversion est reliée au système GSM ou CGSM (CGSM) via un réseau local (LAN).

11. Système de communication selon l'une des revendications 8 à 10, **caractérisé en ce que** l'unité de conversion (KE) est intégrée dans l'installation de communication (PBX).
